Europäisches Patentamt

European Patent Office

Office européen des brevets

(11) Publication number: **0 064 835**
**B1**

(12) **EUROPEAN PATENT SPECIFICATION**

(45) Date of publication of patent specification: **09.10.85**

(51) Int. Cl.⁴: **B 23 K 9/12**

(21) Application number: **82302171.2**

(22) Date of filing: **28.04.82**

(54) **A wire-feed mechanism.**

(30) Priority: **30.04.81 BG 51910/81**

(43) Date of publication of application:
**17.11.82 Bulletin 82/46**

(45) Publication of the grant of the patent:
**09.10.85 Bulletin 85/41**

(84) Designated Contracting States:
**AT CH DE FR GB IT LI NL SE**

(56) References cited:
**FR-A-2 325 584**
**FR-A-2 394 908**
**GB-A- 301 043**

(73) Proprietor: **D S O "IZOT"**
**Chapaev Street, 49**
**Sofia (BG)**

(72) Inventor: **Jelezov, Jivko Yordanov**
**57 Boul. Dondukov**
**Sofia (BG)**
Inventor: **Bogdanov, Todor Damyanov**
**64B, Buntovnik Street**
**Sofia (BG)**

(74) Representative: **Billington, Lawrence Emlyn**
**et al**
**HASELTINE LAKE & CO Hazlitt House 28**
**Southampton Buildings Chancery Lane**
**London WC2A 1AT (GB)**

Courier Press, Leamington Spa, England.

## Description

This invention relates to a wire-feed mechanism and is particularly, but not exclusively, applicable to a wire-feed mechanism for use in feeding a welding electrode wire, for example in welding possibly employing a protective medium. It may thus be employed in production welding.

Patent Specification GB—A—301043 discloses a wire-feed mechanism comprising a housing in which are mounted two cooperable wire-feed rollers freely rotatably supported on respective axles. These axles are arranged at an angle to one another and to a wire-feed path through the mechanism, whereby in use the housing will rotate around a wire and the rollers will operate on the wire in a planetary manner to feed the wire through the housing. At least one of the two rollers is urged towards the wire-feed path by spring means which acts on portions of the roller axle at opposite axial sides of the roller.

A problem associated with such a wire-feed mechanism is the large number of parts and components which are necessary to provide the housing and the mounting of the roller axles in the housing. The present invention seeks to overcome this problem of the prior art.

According to one aspect of the present invention there is provided a wire-feed mechanism comprising a housing in which are mounted two cooperable wire-feed rollers freely rotatably supported on respective axles which are arranged at an angle to one another and to a wire-feed path through the mechanism whereby in use the housing will rotate around a wire and the rollers will operate on the wire in a planetary manner to feed the wire through the housing, at least one of the two rollers being urged towards the wire-feed path by a spring means which acts on portions of the roller axle at opposite axial sides of the roller, characterised in that the axles are mounted in nests provided in a single component mounted in the housing and comprising a central hub in which are provided said nests, and lateral cylindrical parts encircling the wire feed path.

According to a second aspect of the present invention there is provided a wire-feed mechanism comprising a housing in which are mounted two cooperable wire-feed rollers freely rotatably supported on respective axles which are arranged at an angle to one another and to a wire-feed path through the mechanism, whereby in use the housing will rotate around a wire and the rollers will operate on the wire in a planetary manner to feed the wire through the housing, at least one of the two rollers being urged towards the wire-feed path by a spring means which acts on portions of the roller axle at opposite axial sides of the roller, characterised in that the axles are mounted in nests provided in the body of the housing itself, together with threaded coaxial holes in opposite sides of the housing and encircling the wire-feed path.

Preferably, said axle portions are provided by steps at the two ends of the axle.

The housing may be substantially spherical, and may comprise two releasably interconnected substantially hemispherical portions.

Each of said roller axle portions may provide a surface corresponding to an associated cooperating surface portion of a spring washer means.

In an embodiment where the housing comprises two releasably interconnected substantially hemispherical portions, there may be two spring washer means associated with the two respective rollers and retained in respective thrust nests provided in the two respective hemispherical portions.

In an embodiment where the housing comprises two releasably interconnected substantially hemispherical portions, it is possible that, with a single component as aforesaid, at the contact plane between the two hemispherical portions there are provided in opposite sides of the housing two coaxial holes which receive said lateral cylindrical parts, and the opposite ends of said hub are accommodated in nests provided in the two respective hemispherical portions.

In a preferred version of the embodiment described in the preceding paragraph, the contact plane between the two hemispherical portions, and the planes defining the outer extremities of said thrust nests and of said accommodation nests are all substantially parallel, the extremities of said accommodation nests being located beyond the extremities of said thrust nests.

In a development of the second aspect of the present invention there are two spring washer means associated with the two respective rollers and retained in respective thrust nests, these thrust nests being provided at the inner surfaces of two respective caps screwed into opposite sides of the housing such that the caps are coaxial defining an axis which is substantially perpendicular to the axis of said threaded holes encircling the wire feed path.

Preferred embodiments of the present invention may provide a wire-feeding mechanism with a simple, lightweight and technological design having comparatively few parts and components, with a fast reacting but smooth roller adjustment differentiated in accordance with the properties and size of the electrode wire fed in.

For a better understanding of the present invention and to show how it may be put into effect reference will now be made by way of example to the accompanying drawings, in which:

Figure 1 is a longitudinal section of a first embodiment of mechanism according to the invention;

Figure 2 is view along line A in Fig. 1, with a hemisphere of the spherical housing removed;

Figure 3 is a side view of a support-and-guiding unit forming part of Figures 1 and 2;

Figure 4 is a view along line B in Fig. 3, comprising partial sections;

Figure 5 is a view of one roller axle;

Figure 6 is an end view of the axle shown in Fig. 5;

Figure 7 is a view of a second embodiment of mechanism according to the invention comprising partial sections;

Figure 8 is a view along line C in Fig. 7; and

Figure 9 is a section at plane B B in Fig. 8.

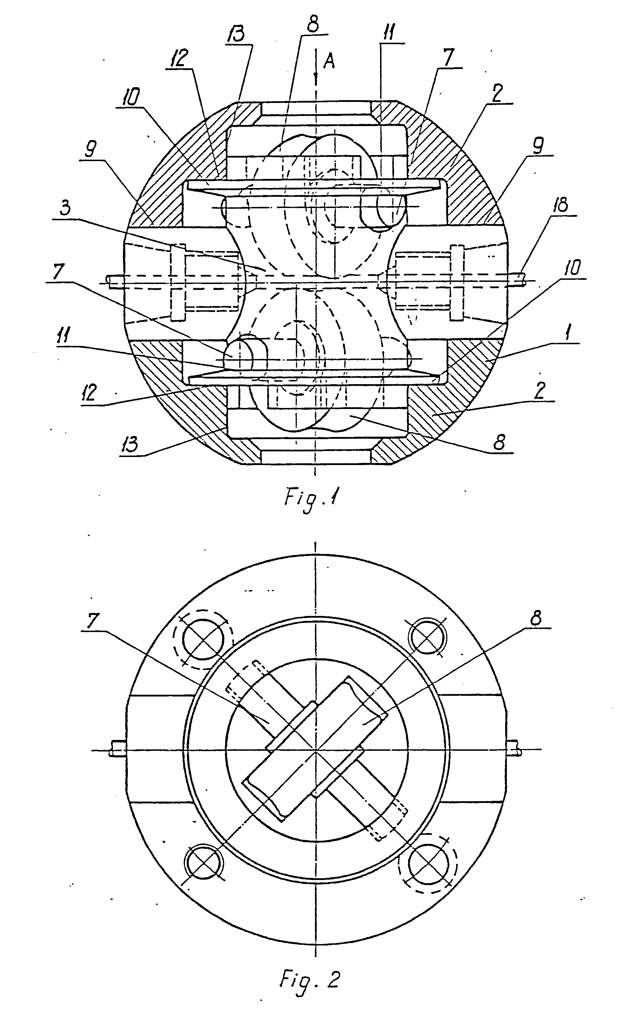

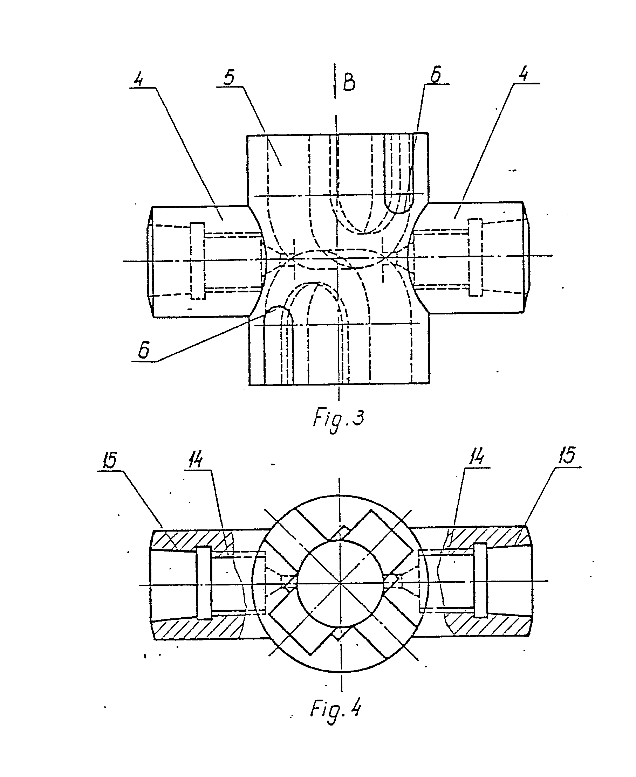

The wire feed mechanism according to the first embodiment shown in Figs. 1 to 6 comprises a spherical housing 1 made up of two identical hemispheres 2 interconnected by collapsible or releasable connections (not shown in the drawings). In the spherical housing 1 is fitted a roller-support and guiding component 3 provided as one body. As shown in Figure 3 it comprises lateral end cylindrical parts 4 and a hub 5. In the hub 5 there are provided four nests 6 in which rest two axles 7, each fitted with one roller 8 which can freely rotate around the supportive axle 7. The axles 7 are mounted at an angle to one another and crossed with respect to the electrode wire feed direction, so that the wire may be circumvened in planetary manner by the rollers 8 in a helical line along the wire.

In each hemisphere 2 there are two opposite half-holes 9 the geometrical axis of which holes lies in the contact plane between the two hemispheres 2.

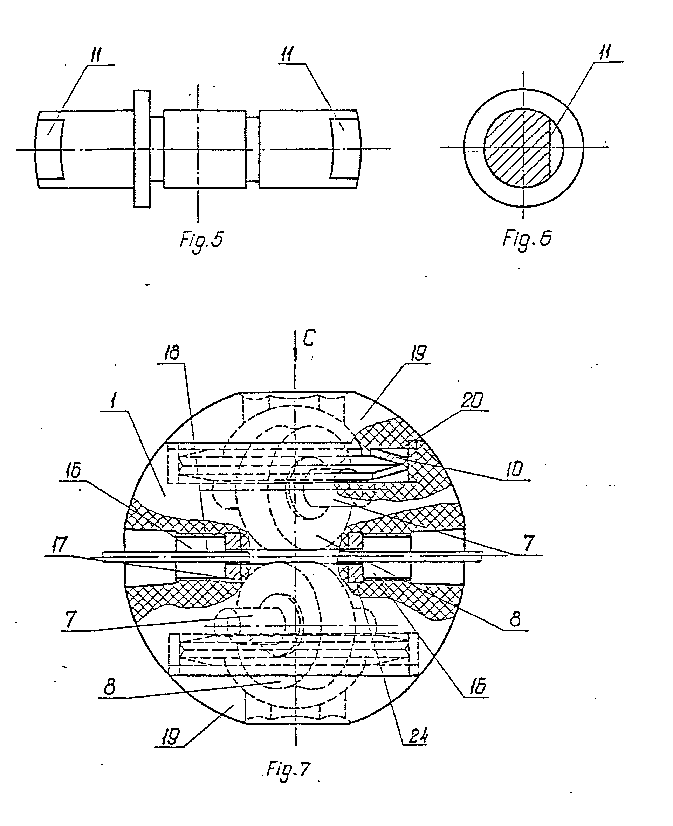

For each roller 8 there is provided a roller pressing device including at least one spring washer 10 resting on steps 11 which are machined at each end of the supportive axle 7. Each step 11 has a surface corresponding to the surface, when flattened, of the spring washer 10 resting on it. Figures 5 and 6 show that this surface can be produced as part of an annulus between two coaxial cylinders of different diameters, the geometrical axis of which cylinders is perpendicular to the plane in which the axle 7 rests. The inner diameter of each washer spring 10 is equal to the diameter of the smaller coaxial cylinder.

Figure 1 shows that the spring washer 10 is pressed onto the axle 7 of roller 8 by means of a respective power transmission unit or urging means. The urging means in this embodiment is designed as a support and thrust nest 12 made in the corresponding hemisphere 2, the nest 12 being parallel to the above-mentioned contact plane between the two hemispheres 2.

The lateral cylindrical parts 4 of the support-and-guiding component 3 fit in the two coaxial holes 9, and the hub 5 fits in cylindrical nests 13 which are machined in each hemisphere 2. The operating or thrust surface of each nest 12 is in a plane perpendicular to the geometrical axis of the cylindrical nest 13.

Figure 3 shows that the nests 6 machined in both ends of the hub 5 are shaped as two pairs of diametrically opposed longitudinal slits. The two axes defined by the four nests 6 cross at an angle from 40° to 120°, and each of these axes lies at half this angle with respect to the axis of the lateral cylindrical parts 4, as shown in Figure 4.

The lateral cylindrical parts 4 of the support-and-guiding component 3 are hollow and provide threads 14 on both sides of the hub 5. The surfaces of the two ends of the lateral cylindrical parts 4 are spherical with a radius equal to the radius of the spherical housing 1. Furthermore, in each lateral cylindrical part 4 there is provided in front of the thread 14 a tapered hole 15 for ease of connection to an electric motor of an electrode wire drive device.

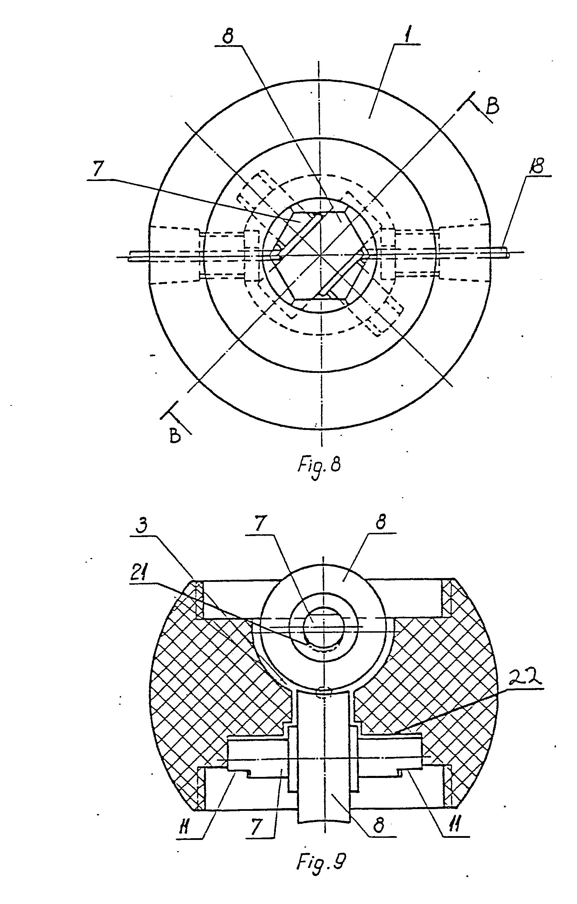

The mechanism according to the second embodiment of the invention is illustrated with reference to Figures 5 to 9 and comprises a spherical housing 1 which itself is formed to provide the roller support and guide function provided in the first embodiment by the separate component shown in Fig. 3. Thus the second embodiment comprises no separate single component such as that shown in Fig. 3. In this embodiment the function of the hub 5 in Fig. 3 is performed by cylindrical nests 21 and 22 machined in the housing 1 for guiding axles 7 on which rest rollers 8 with hyperboloid profile. The geometrical axes of the cylindrical nests 21 and 22 cross at a specified angle.

In the spherical housing 1 two laterally opposed threaded holes 16 are machined, being coaxial with the axis of the electrode wire to be fed. An input nozzle 17 and an output nozzle 24 are built into the threaded holes 16, the electrode wire 18 passing through them.

Each axle 7 is urged towards the wire 18 by means of an urging means which acts on a stack of spring washers 10 resting on steps 11 on the axle 7. Steps 11 are machined at both ends of each axle 7 of roller 8. The surface of each step is the same as that of steps 11 of the first embodiment. The stack of spring washers 10 is coupled to a power transmission unit or urging means which is shaped as a cap 19 the inner part of which is machined to provide a thrust nest 20. Each cap 19 is screwed onto the remainder of the spherical housing 1 so that the two caps 19 are coaxial, with their axis being perpendicular to the fed electrode wire 18.

The wire-feeding mechanism according to the first embodiment operates in the following manner:

The wire-feeding mechanism drive motor is turned-on for feeding the electrode wire 18 for use in welding. The front end of the electrode wire 18 is passed through a hole in the rotating shaft of the electric drive motor (not shown in the drawing) and the electrode wire 18 starts feeding through that lateral cylindrical part 4 which is screwed onto the shaft of the drive motor after the wire feeding mechanism is fully assembled. The housing 1 rotates with the electric motor drive shaft and the rollers 8 have their hyperbolic peripheral surfaces pressed onto the electrode wire 18 with a force equal to the spring forces provided by the deformation of the spring washers 10. The forces which the rollers 8 exert down onto the electrode wire 18, together with the rotation of the housing 1 around the wire, result in tangential forces exerted on the electrode wire 18 in a longitudinal direction coinciding with the feed direction of the electrode wire 18. The value of the actuated tangential forces is sufficient to drive the electrode wire with a speed required for welding. When the electric drive motor is reversed, the wire-feeding mechanism reverses and pulls out the electrode wire 18 from its shrouding hose (not shown).

The second embodiment of the invention operates in a similar manner.

## Claims

1. A wire-feed mechanism comprising a housing (1) in which are mounted two cooperable wire-feed rollers (8) freely rotatably supported on respective axles (7) which are arranged at an angle to one another and to a wire-feed path through the mechanism whereby in use the housing (1) will rotate around a wire (18) and the rollers (8) will operate on the wire (18) in a planetary manner to feed the wire (18) through the housing (1), at least one of the two rollers (8) being urged towards the wire-feed path by a spring means (10) which acts on portions (11) of the roller axle at opposite axial sides of the roller (8), characterised in that the axles (7) are mounted in nests (6) provided in a single component (3) mounted in the housing (1) and comprising a central hub (5) in which are provided said nests (6), and lateral cylindrical parts (4) encircling the wire feed path.

2. A wire-feed mechanism according to claim 1, wherein said spring means (10) is a washer.

3. A wire-feed mechanism according to claim 1 or 2, wherein said axle portions (11) are provided by steps at the two ends of the axle.

4. A wire-feed mechanism according to any preceding claim, wherein the housing (1) is substantially spherical.

5. A wire-feed mechanism according to claim 2, or claim 3 or 4 appended thereto, wherein each of said roller axle portions (11) provides a surface corresponding to the associated cooperating surface portion of the spring washer means (10).

6. A wire-feed mechanism according to claim 4, or claim 5 when appended to claim 4, wherein the housing (1) comprises two releasably interconnected substantially hemispherical portions (2).

7. A wire-feed mechanism according to claim 6 when claim 4 is appended to claim 2, wherein there are two spring washers (10) associated with the two respective rollers (8) and retained in respective thrust nests (6) provided in the two respective hemispherical portions (2).

8. A wire-feed mechanism according to claim 6 or 7, wherein at the contact plane between the two hemispherical portions (2) there are provided in opposite sides of the housing (1) two coaxial holes (9) which receive said lateral cylindrical parts (4), and the opposite ends of said hub (5) are accommodated in nests (13) provided in the two respective hemispherical portions (2).

9. A wire-feed mechanism according to claim 8 when appended to claim 7, wherein the contact plane between the two hemispherical portions (2), and the planes defining the outer extremities of said thrust nests (12) and of said accommodation nests (13) are all substantially parallel, the extremities of said accommodation nests (13) being located beyond the extremities of said thrust nests (12).

10. A wire-feed mechanism comprising a housing (1) in which are mounted two cooperable wire-feed rollers (8) freely rotatably supported on respective axles (7) which are arranged at an angle to one another and to a wire-feed path through the mechanism, whereby in use the housing (1) will rotate around a wire (18) and the rollers (8) will operate on the wire (18) in a planetary manner to feed the wire (18) through the housing (1), at least one of the two rollers (8) being urged towards the wire-feed path by a spring means (10) which acts on portions of the roller axle (7) at opposite axial sides of the roller (8), characterised in that the axles (7) are mounted in nests (21, 22) provided in the body of the housing (1) itself, together with threaded coaxial holes (16) in opposite sides of the housing (1) encircling the wire feed path.

11. A wire-feed mechanism according to claim 10, wherein said spring means (10) is a washer.

12. A wire-feed mechanism according to claim 10 or 11, wherein said axle portions are provided by steps at the two ends of the axle (7).

13. A wire-feed mechanism according to claim 10, 11 or 12, wherein the housing (1) is substantially spherical.

14. A wire-feed mechanism according to claim 11, or claims 12 or 13 when appended to claim 11, wherein each of said roller axle portions (11) provides a surface corresponding to the associated cooperating surface portion of the spring washer means (10).

15. A wire-feed mechanism according to claim 11 or any of claims 12 to 14 appended to claim 11, wherein there are two spring washer means (10) associated with the two respective rollers 8 and retained in respective thrust nests (20), these thrust nests (20) being provided at the inner surfaces of two respective caps (19) screwed into opposite sides of the housing (1) such that the caps (19) are coaxial defining an axis which is substantially perpendicular to the axis of said threaded holes (16) encircling the wire feed path.

## Patentansprüche

1. Drahtzuführungsmechanismus mit einem Gehäuse (1), in welchem zwei miteinander zusammenwirkende Drahtzuführungsrollen (8) angeordnet sind, die frei drehbar auf jeweiligen Achsen (7) sitzen, welche unter einem Winkel zueinander und zu einem Drahtzuführungsweg durch den Mechanismus angeordnet sind, wobei sich im Einsatz das Gehäuse (1) um einen Draht (18) dreht und die Rollen (8) auf dem Draht (18) planetenförmig wirksam werden, um den Draht (18) durch das Gehäuse (1) zu transportieren, und wenigstens eine der beiden Rollen (8) gegen den Drahtzuführungsweg durch eine Federeinrichtung (10) gedrückt wird, die auf Abschnitte (11) der Rollenachse auf gegenüberliegenden axialen Seiten der Rolle (8) wirken, dadurch gekennzeichnet, daß die Achsen (7) in Aufnahmen (6) angebracht sind, die in einem einzigen Bauteil (3) vorgesehen sind, das im Gehäuse (1) angeordnet ist und eine zentrale Nabe (5) aufweist, in der die Aufnahmen (6) vorgesehen sind, wobei seitliche zylindrische Teile (4) den Drahtzuführungsweg umschließen.

2. Drahtzuführungsmechanismus nach Anspruch 1, dadurch gekennzeichnet, daß die Federeinrichtung (10) eine Scheibe ist.

3. Drahtzuführungsmechanismus nach Anspruch 1 oder 2, dadurch gekennzeichnet, daß die Achsabstufungen (11) von Abstufungen an den beiden Enden der Achse gebildet werden.

4. Drahtzuführungsmechanismus nach einem der vorhergehenden Ansprüche, bei welchem das Gehäuse (1) im wesentlichen kugelförmig ist.

5. Drahtzuführungsmechanismus nach Anspruch 2 oder 3 oder 4, soweit darauf bezogen, bei welchem die Rollenachsabschnitte (11) eine Oberfläche bilden, die dem zugeordneten, damit zusammenwirkenden Oberflächenabschnitt der Federscheibeneinrichtung (10) entspricht.

6. Drahtzuführungsmechanismus nach Anspruch 4 oder nach Anspruch 5, wenn auf Anspruch 4 bezogen, bei welchem das Gehäuse (1) zwei lösbar miteinander verbundene, im wesentlichen halbkugelige Abschnitte (2) aufweist.

7. Drahtzuführungsmechanismus nach Anspruch 6, wobei Anspruch 4 auf Anspruch 2 bezogen ist, bei welchem zwei Federscheiben (10) vorgesehen sind, die den beiden jeweiligen Rollen (8) zugeordnet und in jeweiligen Schubaufnahmen (6) gehalten sind, die in den beiden jeweiligen halbkugeligen Abschnitten (2) vorgesehen sind.

8. Drahtzuführungsmechanismus nach Anspruch 6 oder 7, bei welchem an der Kontaktebene zwischen den beiden halbkugeligen Abschnitten (2) auf gegenüberliegenden Seiten des Gehäuses (1) zwei koaxiale Löcher (9) vorgesehen sind, welche die seitlichen zylindrischen Teile (4) aufnehmen, wobei die gegenüberliegenden Enden der Nabe (5) in Aufnahmen (13) aufgenommen sind, die in den beiden jeweiligen halbkugeligen Abschnitten (2) vorgesehen sind.

9. Drahtzuführungsmechanismus nach Anspruch 8, soweit auf Anspruch 7 bezogen, bei welchem die Kontaktebene zwischen den zwei halbkugeligen Abschnitten (2) und die Ebenen, welche die äußeren Enden der Schubaufnahmen (12) und der Aufnahmen (13) bilden, alle im wesentlichen parallel sind, wobei die Enden der Aufnahmen (13) sich jenseits der Enden der Schubaufnahmen (12) befinden.

10. Drahtzuführungsmechanismus mit einem Gehäuse (1), in welchem zwei miteinander zusammenwirkende Drahtzuführungsrollen (8) angeordnet sind, die frei drehbar auf jeweiligen Achsen (7) sitzen, welche unter einem Winkel zueinander und zu einem Drahtzuführungsweg durch den Mechanismus angeordnet sind, wobei sich im Einsatz das Gehäuse (1) um einen Draht (18) dreht und die Rollen (8) auf dem Draht (18) planetenförmig wirksam werden, um den Draht (18) durch das Gehäuse (1) zu transportieren, und wenigstens eine der beiden Rollen (8) gegen den Drahtzuführungsweg durch eine Federeinrichtung (10) gedrückt wird, die auf Abschnitte (11) der Rollenachse auf gegenüberliegenden axialen Seiten der Rolle (8) wirken, dadurch gekennzeichnet, daß die Achsen (7) in Aufnahmen (21, 22) im Körper des Gehäuses (1) selbst zusammen mit koaxialen Gewindebohrungen (16) auf gegenüberliegenden Seiten des Gehäuses (1) angeordnet sind, die den Drahtzuführungsweg umschließen.

11. Drahtzuführungsmechanismus nach Anspruch 10, dadurch gekennzeichnet, daß die Federeinrichtung (10) eine Scheibe ist.

12. Drahtzuführungsmechanismus nach Anspruch 10 oder 11, dadurch gekennzeichnet, daß die Achsabschnitte von Abstufungen an den beiden Enden der Achse (7) gebildet werden.

13. Drahtzuführungsmechanismus nach Anspruch 10, 11 oder 12, bei welchem das Gehäuse (1) im wesentlichen kugelförmig ist.

14. Drahtzuführungsmechanismus nach Anspruch 11 oder nach Anspruch 12 oder 13, soweit auf Anspruch 11 zurückbezogen, bei welchem jeder der Rollenachsabschnitte (11) eine Oberfläche bildet, die dem zugeordneten, damit zusammenwirkenden Oberflächenabschnitt der Federscheibeneinrichtung (10) entspricht.

15. Drahtzuführungsmechanismus nach Anspruch 11 oder nach einem der Ansprüche 12 bis 14, soweit auf Anspruch 11 bezogen, bei welchem zwei Federscheibeneinrichtungen (10) vorgesehen sind, die den beiden jeweiligen Rollen (8) zugeordnet und in den jeweiligen Schubaufnahmen (20) gehalten sind, wobei diese Schubaufnahmen (20) an den inneren Oberflächen von zwei jeweiligen Kappen (19) vorgesehen sind, die in gegenüberliegende Seiten des Gehäuses (1) so geschraubt sind, daß die Kappen (19) koaxial angeordnet sind und eine Achse bilden, die im wesentlichen senkrecht zur Achse der Gewindelöcher (16) ist, die den Drahtzuführungsweg umschließen.

**Revendications**

1. Mécanisme d'alimentation en fil comprenant un carter (1) dans lequel sont montés deux rouleaux (8) d'alimentation en fil aptes à coopérer et montés librement à rotation sur des axes (7) respectifs qui sont disposés en formant un angle entre eux et par rapport au trajet d'alimentation traversant le mécanisme, et dans lequel, en utilisation, le carter (1) tourne autour d'un fil (18) et les rouleaux (8) agissent sur le fil (18) d'une manière planétaire afin d'alimenter le fil (18) à travers le carter (1), l'un au moins des deux rouleaux (8) étant sollicité en direction du trajet d'alimentation en fil au moyen d'un organe à ressort (10) qui agit sur des zones (11) de l'axe du rouleau situées sur des côtés axialement opposés du rouleau (8), ledit mécanisme d'alimentation étant caractérisé en ce que les axes (7) sont montés dans des logements (6) ménagés dans un constituant unique (3) monté dans le carter (1) et comprenant un moyeu central (5) dans lequel sont disposés lesdits logements (6), et des parties cylindriques latérales (4) entourant le trajet d'alimentation du fil.

2. Mécanisme d'alimentation en fil selon la revendication 1, dans lequel ledit organe à ressort (10) est une rondelle élastique.

3. Mécanisme d'alimentation en fil selon la revendication 1 ou 2, dans lequel lesdites zones (11) d'axe sont pourvues de décolletages aux deux extrémités de l'axe.

4. Mécanisme d'alimentation en fil selon l'une quelconque des revendications précédentes, dans lequel le carter (1) est de forme sensiblement sphérique.

5. Mécanisme d'alimentation en fil selon la revendication 2, ou selon la revendication 3 ou 4 dépendantes, dans lequel chacune desdites zones (11) d'axe de rouleau présente une surface qui correspond à la zone de surface associée du moyen à rondelle élastique (10) avec laquelle elle coopère.

6. Mécanisme d'alimentation en fil selon la revendication 4 ou selon la revendication 5 si elle est dépendante de la revendication 4, dans lequel le carter (1) comprend deux parties (2) sensiblement hémisphériques interconnectées de manière libérable.

7. Mécanisme d'alimentation en fil selon la revendication 6 si la revendication 4 est dépendante de la revendication 2, dans lequel il y a deux rondelles élastiques (10) associées respectivement aux deux rouleaux (8), et retenues dans des logements à butée axiale (6) correspondant ménagés respectivement dans les deux parties hémisphériques (2).

8. Mécanisme d'alimentation en fil selon la revendication 6 ou 7, dans lequel sont disposés, dans le plan de contact entre les deux parties hémisphériques (2), deux trous coaxiaux (9) qui reçoivent, sur les côtés opposés du carter (1), lesdites parties cylindriques latérales (4), et dans lequel les extrémités opposées dudit moyeu (5) sont logées dans des logements (13) disposés respectivement dans les deux parties hémisphériques.

9. Mécanisme d'alimentation en fil selon la revendication 8 si elle est dépendante de la revendication 7, dans lequel le plan de contact entre les deux parties hémisphériques (2), et les plans définissant les extrémités extérieures desdits logements à butée axiale (12) et desdits logements récepteurs (13) sont tous sensiblement parallèles, les extrémités desdits logements récepteurs (13) étant situées au-delà des extrémités desdits logements à butée axiale (12).

10. Mécanisme d'alimentation en fil comprenant un carter (1) dans lequel sont montés deux rouleaux (8) d'alimentation en fil aptes à coopérer et montés librement à rotation sur des axes (7) respectifs qui sont disposés en formant un angle entre eux et par rapport au trajet d'alimentation traversant le mécanisme, et dans lequel, en utilisation, le carter (1) tourne autour d'un fil (18) et les rouleaux (8) agissent sur le fil (18) d'une manière planétaire afin d'alimenter le film (18) à travers le carter (1), l'un au moins des deux rouleaux (8) étant sollicité en direction du trajet d'alimentation en fil au moyen d'un organe à ressort (10) qui agit sur des zones de l'axe (7) du rouleau situées sur des côtés axialement opposés du rouleau (8), ledit mécanisme d'alimentation étant caractérisé en ce que les axes (7) sont montés dans des logements (21, 22) ménagés dans le corps du carter (1) lui-même, associés avec des trous coaxiaux filetés (16) percés dans des côtés opposés du carter (1) et entourant le trajet d'alimentation du fil.

11. Mécanisme d'alimentation en fil selon la revendication 10, dans lequel ledit organe élastique (10) est une rondelle élastique.

12. Mécanisme d'alimentation en fil selon la revendication 10 ou 11, dans lequel lesdites zones d'axe sont pourvues de décolletages aux deux extrémités de l'axe (7).

13. Mécanisme d'alimentation en fil selon la revendication 10, 11 ou 12, dans lequel le carter (1) est de forme sensiblement sphérique.

14. Mécanisme d'alimentation en fil selon la revendication 11, ou la revendication 12 ou 13 si elle est dépendante de la revendication 11, dans lequel chacune desdites zones (11) d'axe de rouleau présente une surface correspondant à la partie de surface associée de l'organe à rondelle élastique (10) avec laquelle elle coopère.

15. Mécanisme d'alimentation en fil selon la revendication 11 ou selon l'une quelconque des revendication 12 à 14 dépendante de la revendication 11, dans lequel deux organes à rondelle élastique (10) associés aux deux rouleaux (8) respectifs et retenus dans leurs logements à butée axiale (20) respectifs, ces logements à butée axiale (20) étant respectivement pourvus sur leurs surfaces intérieures de deux capuchons (19) vissés dans les côtés opposés du carter (1) de manière à ce que les capuchons (19) soient coaxiaux en définissant un axe qui est sensiblement perpendiculaire à l'axe desdits trous filetés (16) entourant le trajet d'alimentation du fil.

Fig. 1

Fig. 2

1

Fig. 3

Fig. 4

Fig. 5

Fig. 6

Fig. 7

Fig. 8

Fig. 9